# EUROPEAN PATENT APPLICATION

(11) **EP 4 537 729 A2**
(43) Date of publication of application: **16.04.2025**
(21) Application number: 24206073.9
(22) Date of filing: 11.10.2024
(51) Int. Cl.: A47L 13/18, B08B 1/14, B32B 1/00

(54) **CLEANING MITT, METHOD OF PREPARING A CLEANING MITT, AND CLEANING SYSTEM**

(30) Priority: 12.10.2023 US 202318485374
(71) Applicant: Carl Freudenberg KG, 69469 Weinheim (DE)
(72) Inventor: ASHLEY, Blake, Littleton 80128 (US); CECALA, Fred, Mount Prospect 60056 (US); GUBENKO, Leo, Winfield 60190 (US); REIMAN, Ulla, 24100 Salo (FI)
(74) Representative: DREISS Patentanwälte PartG mbB

(57) **Abstract**

A cleaning mitt includes an outer fabric and an inner fabric, the outer fabric being configured for cleaning surfaces, a receiving opening configured for receiving a hand of a user, a seamless folding edge arranged opposite the receiving opening, and at least two corner openings on either side of the seamless folding edge.

## Description

### FIELD

The present disclosure relates to a cleaning mitt, a method of preparing a cleaning mitt, and a cleaning system.

### BACKGROUND

Controlled manufacturing environments are crucial in industries such as semiconductor fabrication, pharmaceutical manufacturing, and precisions optics. These environments require maintaining stringent cleanliness standards, including maintaining sterility and ensuring low particle contamination (i.e., keeping surfaces and the air debris free) in order to avoid compromising product quality. Indeed, many facilities, particularly pharmaceutical manufacturing facilities, are required by industry standards or government regulations to maintain a high degree of sterility and cleanliness.

The foregoing can be problematic, as conventional cleaning tools lack the versatility required to clean the varying surface shapes found on manufacturing equipment, which can include tubes and corners that are difficult to clean or reach using cleaning tools designed for flat surfaces. Cleaning tools that are complex to address complex equipment surfaces also increase the risk of contamination through debris creation caused by components interacting with one another.

In addition, cleaning tools must use materials that will not damage equipment or create debris in the form of lint. As a result, some conventional solutions involve the use of disposable or single-use cleaning materials. Such solutions are not environmentally friendly and can be costly over time. However, reusable cleaning tools lack the versatility required to clean varying surface shapes of complex equipment and may include corners or crevasses where debris such as lint can accumulate. Furthermore, reusable cleaning tools are not always compatible with commercial laundering and/or sterilizing procedures. Accordingly, an improved cleaning device, cleaning device preparation method, and cleaning system are needed.

### SUMMARY

In a first aspect of the present disclosure, a cleaning mitt is provided, the cleaning mitt comprising an outer fabric and an inner fabric, the outer fabric being configured for cleaning surfaces, a receiving opening configured for receiving a hand of a user, a seamless folding edge arranged opposite the receiving opening, and at least two corner openings on either side of the seamless folding edge.

In a second aspect of the present disclosure, a method for preparing a cleaning mitt is provided, the method comprising providing an uninterrupted body of fabric and removing two portions of the uninterrupted body of fabric, the two portions being on opposite longitudinal edges of the uninterrupted body of fabric and aligned with a folding line perpendicular to the longitudinal edges. The method further comprises folding the uninterrupted body of fabric along the folding line and sewing each longitudinal edge of the folded uninterrupted body of fabric to form a receiving opening for receiving a hand of a user in the folded uninterrupted body of fabric.

In a third aspect of the present disclosure, a cleaning system is provided, the cleaning system comprising a plurality of cleaning mitts stacked side-by-side and arranged in a container, a cart including a support configured to receive and support a weight of the container, a disposal bag for disposing of used cleaning mitts, and one or more wheels configured to provide mobility to the cleaning system.

### BRIEF DESCRIPTION OF THE DRAWINGS

Subject matter of the present disclosure will be described in even greater detail below based on the exemplary figures. All features described and/or illustrated herein can be used alone or combined in different combinations. The features and advantages of various embodiments will become apparent by reading the following detailed description with reference to the attached drawings, which illustrate the following:
FIGS. 1A-1G illustrate various views of a cleaning mitt according to an embodiment of the present disclosure;
FIG. 1H illustrates a perspective view of a cleaning mitt with partially opened corner openings according to an embodiment of the present disclosure;
FIG. 2 illustrates a cleaning mitt with an inner label;
FIG. 3 illustrates various surfaces a cleaning mitt may be configured for cleaning according to an embodiment of the present disclosure;
FIGS. 4A-4C illustrate a cleaning mitt arranged on a user according to an embodiment of the present disclosure;
FIGS. 5A-5B illustrate cleaning patterns according to embodiments of the present disclosure;
FIGS. 6A-6B illustrate cleaning carts according to embodiments of the present disclosure;
FIG. 7 illustrates a cleaning mitt preparation method according to an embodiment of the present disclosure;
FIG. 8 illustrates further cleaning mitt preparation steps of the method according to FIG. 7; and
FIG. 9 illustrates a pattern for assembling a cleaning mitt according to an embodiment of the present disclosure.

### DETAILED DESCRIPTION

Aspects of the present disclosure are directed to a reusable cleaning mitt configured to be worn by a user that provides improved cleaning performance for controlled manufacturing environments. The cleaning mitt includes an outer surface that is configured to wipe a surface in order to both clean and disinfect the surface in a single stroke. The outer surface comprises a high performance microfiber that, in terms of cleaning efficacy, is configured to provide a 4-log reduction in bacteria presence per step/wipe as measured by bacterial removal tests. The reduction in bacterial presence is achieved by mechanical and capillary action of the high performance microfiber, and in particular due to the size of the microfibers in combination with the durable characteristics of the microfiber. In particular, the smaller the fibers and the smaller the gaps between the fibers, the deeper the cleaning and the better the capillary action of the high performance microfiber, which has a low coefficient of friction. A very intense surface interaction via the small fibers of the microfiber penetrating into surfaces at a finer level than normal fibers provides for more effective removal of debris from the surface. In an embodiment, the microfibers of the high performance microfiber are more than ten times smaller than a traditional polyester fiber. In some embodiments, the microfibers of the high performance microfiber are more than 80 times smaller than a typical human hair.

In an embodiment of the cleaning mitt according to the present disclosure, the cleaning mitt complies with residue removal standards set forth in European Union Good Manufacturing Practice (EU GMP) Annex 1 for the manufacturing of sterile products, including pharmaceutical products. In an embodiment, the high performance microfiber is configured to withstand a sterilization process that includes autoclaving and gamma irradiation. In an embodiment, the high performance microfiber is configured to withstand up to 40 cycles of gamma irradiation and 80 cycles of autoclaving. Each autoclaving cycle may be carried out at up to 121 degrees Celsius for 20 minutes. In an embodiment, the high performance microfiber may be configured to withstand up to ten cycles of autoclaving at 134 degrees Celsius for 5 minutes per cycle.

The high performance microfiber may comprise 100% polyethersufone (PES) and may comprise 50% PES microfiber and 50% needled PES felt, resulting in a high absorbency and low particle shedding. In an embodiment, the high performance microfiber, if tested using the Helmke Drum Test, results in a category 1 or category 2 classification. In an embodiment, the high performance microfiber is compliant with Institute of Environmental Sciences and Technology (IEST) Recommended Practices (RP) standards, such as the IEST-RP-CC-003.4 standard, and/or is compliant with cleanroom compliance standards established by the International Organization for Standardization (ISO), such as ISO-5. In some embodiments, the high performance microfiber is compliant with Good Manufacturing Practice (GMP) standards, such as GMP grades A and/or B, thus providing cleaning for aseptic and/or sterile applications.

**Table 1: Airborne particles released during Helmke Drum Test of high performance microfiber of the present disclosure, with results measuring average particles per minute in cumulative particle size ranges.**

| | Particle size in microns | | | | | |
|---|---|---|---|---|---|---|
| | 0.3 and larger | 0.5 and larger | 1.0 and larger | 3.0 and larger | 5.0 and larger | 10.0 and larger |
| Average Measurement | 933 | 835 | 720 | 422 | 253 | 75 |

In an embodiment, a binding band seals edges of the cleaning mitt to mitigate loose ends and/or fraying. The liquid absorbency and laydown capabilities of the inner and outer materials of the cleaning mitt enhance cleaning performance by specifically providing for leaving disinfectants behind for a specified duration (e.g., with a predetermined dwell time and/or contact time) that is needed for a particular chemical disinfection operation. The high performance microfiber is also highly resistant to chemicals, making it compatible with many common cleaning agents and/or solutions, as shown in Table 2, with "++" indicating a high pass rating, "+" indicating a pass rating, and "--" indicating a non-passing rating.

**Table 2: Chemical resistance test results of high performance microfiber according to embodiments of the present disclosure.**

| Cleaning agent ingredients | Reaction Time | | |
|---|---|---|---|
| | 1 hour | 24 hours | 168 hours |
| Amidosulfuric acid 5% | ++ | ++ | ++ |
| Phosphoric acid 24% | ++ | ++ | ++ |
| Acetic acid 5% | ++ | ++ | ++ |
| Caustic soda (I) 5% | ++ | ++ | + |
| Glutaraldehyde 2% | ++ | ++ | ++ |
| Quaternary ammonium sale (QAV) 2% | ++ | ++ | ++ |
| Hydrogen peroxide 5% | ++ | ++ | ++ |
| Sodium hypochlorite ca. 6% | ++ | + | -- |
| Anionic tenside 10% | ++ | ++ | ++ |
| Non-ionic tenside 3% | ++ | ++ | ++ |
| Alcoholic solution 60% | ++ | ++ | ++ |

It has been found that the high performance microfiber according to embodiments of the present disclosure, when moistened by 24 ml of sterile water, could be used to wipe a surface at a speed of 5 cm/second to reduce bacterial presence on a test surface by greater than 99.99% from 3.7 × 10¹⁰ colony forming units (CFU) per square meter to 2.0 × 10⁴ CFU per square meter.

The cleaning mitt advantageously provides dexterity and convenience for cleaning hard-to-reach and uneven surfaces commonly found in controlled environments. In some embodiments, the microfiber material of the cleaning mitt is configured to be suitable for cleanroom use due to its cleaning performance properties, low friction properties, and non-shedding properties that prevent it from shedding particles during use. In some embodiments, the cleaning mitt includes a polyester with melted edges to prevent shedding. The cleaning mitt also includes continuous fibers to help eliminate shedding. The cleaning mitt is compatible with commercial laundry autoclaving and is suitable for gamma-irradiation for reusability in sterile environments. In an embodiment, the cleaning mitt comprises the same materials used in the MicronSwep^{®} mop by Vileda Professional.

In an embodiment, a cleaning mitt is provided that is double-sided, thereby enabling the mitt to provide more surface cleaning coverage than conventional cleaning products. The cleaning mitt is configured to clean a variety of surfaces of varying shape and to conform to the shape of a user's hand during a cleaning operation. The cleaning mitt is thereby configured to clean and disinfect surfaces that are difficult to reach and properly clean using conventional devices, such as piping, tubing, door knobs, hinges, door frames, non-flat surfaces, chemical storage tanks, and other processing equipment, particularly equipment found in pharmaceutical manufacturing environments.

The cleaning mitt includes corner openings at an end opposite an entry end, the entry end being configured to receive a user's hand. Advantageously, the corner openings enhance the rinsing performance of the mitt during a laundry operation, including ensuring that fibers and fluffs can be rinsed out easily during laundry and are not trapped in a closed edge of the glove.

The cleaning mitt is configured to clean a predetermined surface area of one or more cleaning surfaces, and can be prepared and stored together with a plurality of cleaning mitts in a container configured for preparation, storage, and transport of the plurality of cleaning mitts.

The cleaning mitt may include an inner label configured to uniquely identify the cleaning mitt among the plurality of cleaning mitts, thereby providing for tracking of the cleaning mitt through cleaning operations and laundering, and enabling monitoring the cleaning mitt over its predetermined usable life cycle. The inner label may include one or more of a barcode, a serial number, an integrated radio frequency identification (RFID) tag, and an electronic identifying chip. By being trackable, the cleaning mitt can be advantageously used more effectively, such as by ensuring that the cleaning mitt is not left unattended in a sterile environment thereby eliminating a potential contamination source, and by ensuring that the product is not used beyond its useful life thereby maintaining a consistent cleaning performance.

In an embodiment, a cleaning system is provided that includes a wheeled cart with one or more trays or shelves, each of which are configured to support at least one cleaning mitt container. Each cleaning mitt container is configured to store a plurality of cleaning mitts. The cleaning system includes a disposal bag for receiving soiled cleaning mitts and a handle with which a user may exert a force to move the cart. In some embodiments, a scanner is included to read an inner label of each cleaning mitt extracted from a container of the system and/or each cleaning mitt inserted into the disposal bag.

In an embodiment, the present disclosure is directed to a method for assembling a cleaning mitt. The method includes providing a folding line across a width of a rectangular fabric. At least one portion aligned with the folding line is cut out of the rectangular fabric such that the folded mitt does not include a corner where debris can accumulate. For example, in an embodiment, at least one triangular portion is cut out of the rectangular fabric with the apex of each triangular portion being arranged with its apex aligned with the folding line. The fabric is folded along the folding line with a cleaning side of the fabric facing outward. Edges along the length of the fabric are sewn together to form a mitt with an open end. In an embodiment, a handle is sewn at or near the open end of the mitt together with the edges of the fabric that are sewn together. In an embodiment, the handle is sewn to the cleaning mitt after the edges of the fabric are sewn together. In some embodiments, an inner label providing a unique identifier of the cleaning mitt is sewn to an inner surface of the cleaning mitt. In some embodiments, the fabric is folded evenly along the folding line, while in other embodiments the fabric is folded unevenly along the folding line such that one edge of the fabric opposite the folding line protrudes beyond the opposing edge of the fabric when folded.

In an embodiment, a method for cleaning a surface is provided, the method comprising beginning at one end of the surface and wiping the surface with a cleaning mitt in a figure eight pattern while progressively and simultaneously moving toward an opposing end of the surface.

In an embodiment, a method for cleaning a surface is provided, the method comprising beginning at a first end of the surface and wiping the surface in a straight line toward the opposing end of the surface to perform a first wipe. The method further comprises beginning at the first end of the surface and wiping the surface in a straight line toward the opposing end of the surface to perform a second wipe, the second wipe overlapping at least a portion of the first wipe and being laterally offset from the first wipe.

In an embodiment, a method for pre-preparing a plurality of cleaning mitts for a cleaning operation is provided. The method comprises stacking a plurality of cleaning mitts in a container in a side-by-side configuration and placing a sieve over the container and the plurality of cleaning mitts. A cleaning solution is poured over the plurality of cleaning mitts through the sieve. In some embodiments, the container is tilted to a 45 degree angle in four different directions, each tilted position being held for a predetermined period of time. The container is allowed to sit for a predetermined waiting period to allow the cleaning solution to sufficiently saturate the plurality of cleaning mitts. The foregoing provides a pre-preparation cleaning mitt dosing method that saves water and chemical usage compared to conventional cleaning implement preparation methods.

As is apparent to one skilled in the art, the cleaning mitts, the methods of using such cleaning mitts, and the cleaning systems including such cleaning mitts each implemented according to one or more aspects of the present disclosure provide technical advantages over the state of the art. For example, as introduced above, aspects of the present disclosure provide an environmentally friendly cleaning solution for controlled manufacturing environments that enables easy and efficient cleaning and disinfecting of surfaces in one stroke, while preventing contamination associated with the cleaning process itself. These and other advantages will become more apparent in view of the below discussion of exemplary embodiments in connection with the accompanying figures.

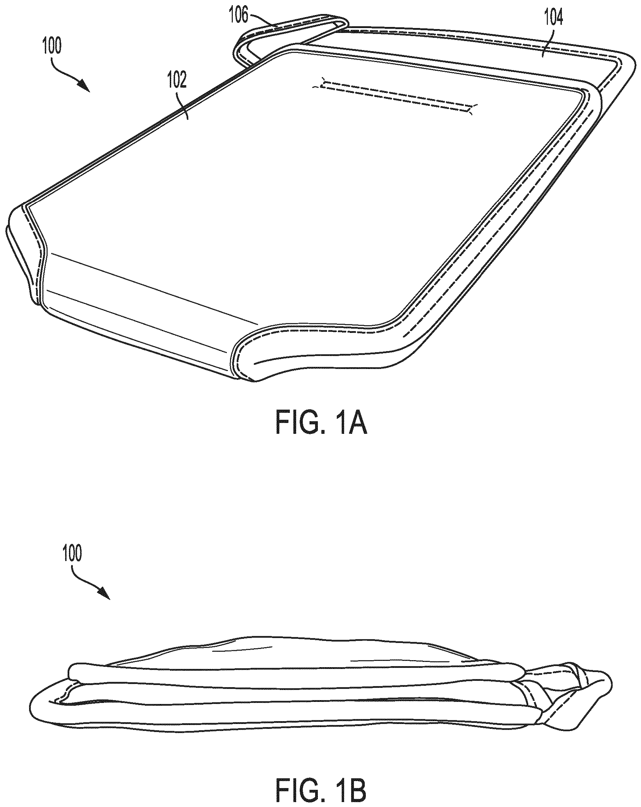

FIG. 1A illustrates a perspective view of a cleaning mitt 100 according to an embodiment of the present disclosure. The cleaning mitt includes an outer side 102 that is exposed to the environment, an inner side 104, and a handle 106 (illustrated here as a loop). The outer side 102 is configured for cleaning one or more surfaces. In some embodiments, the outer side 102 is configured for dry cleaning of surfaces. In some embodiments, the outer side 102 is configured for wet cleaning of surfaces and may be pretreated with a cleaning solution prior to commencement of a cleaning operation. In some embodiments, the outer side 102 may be configured to clean a surface that has been treated with a cleaning solution or the outer side 102 may be configured to be treated with a cleaning solution during a cleaning operation. One side of the cleaning mitt 100 may protrude relative to an opposing side of the cleaning mitt 100, thereby exposing at least part of the inner side 104 to the environment. The handle is affixed near an open end of the cleaning mitt 100 through which a user may insert their hand, as will be illustrated and described hereafter. The handle 106 is sewn to the cleaning mitt 100 with sufficient stitching to withstand forces required for a cleaning operation, including forces exerted by a user to pull the cleaning mitt 100 over their hand.

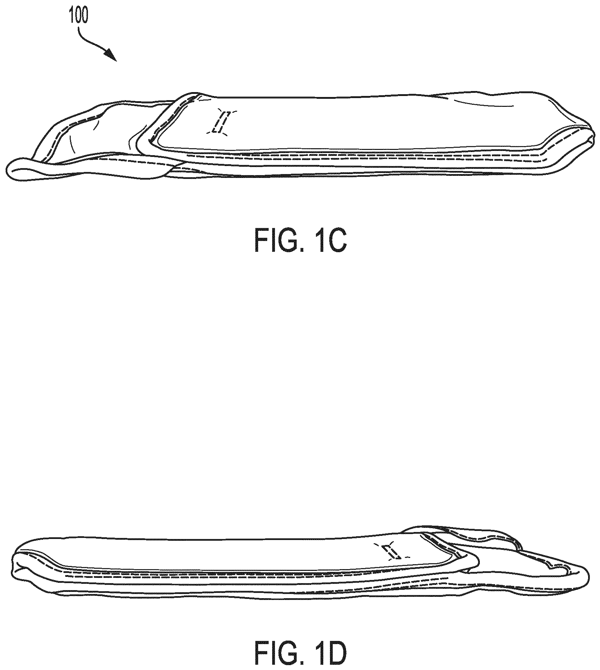

FIGS. 1B, 1C, and 1D illustrate rear, left side, and right side views of the cleaning mitt 100, respectively.

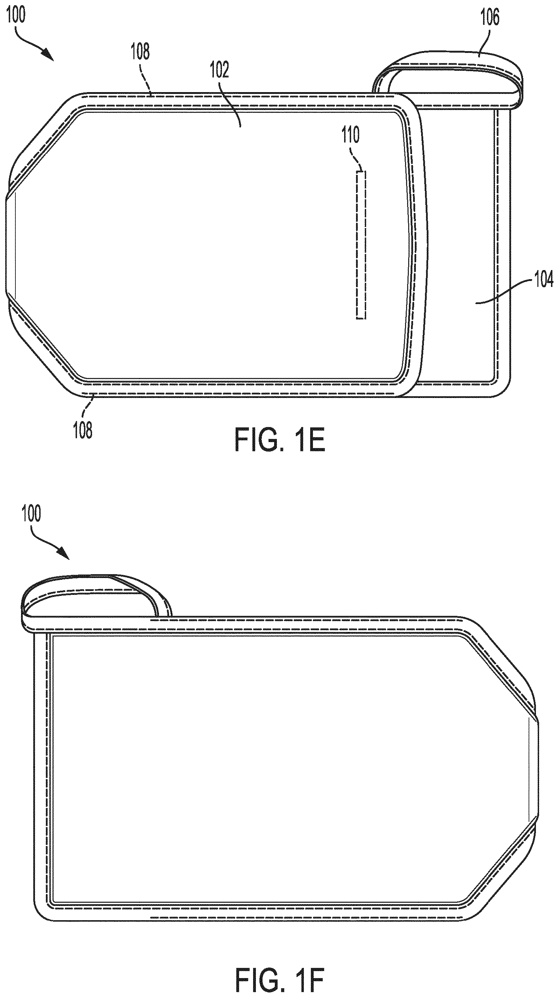

FIG. 1E illustrates a top view of the cleaning mitt 100. Edges 108 of the cleaning mitt (which may also be described as longitudinal or lengthwise edges) are sewn together to provide an inner enclosed space of the cleaning mitt into which a user may insert their hand. In the illustrated embodiment, the edges 108 include a binding band surrounding edges of the inner and outer sides 102, 104, the binding band including a non-linting textile. The binding band comprises a woven material without loose ends or threads, and which is configured to not shed (i.e., leave behind particles and/or lint) as the cleaning mitt 100 moves across a surface during a cleaning process. In an embodiment, the binding band further comprises a trim band configured to seal in exposed edges of the polyester felt material of the binding band. In an embodiment, the binding band is sewn onto and around the edges 108 of the cleaning mitt 100, thus creating a barrier that prevents knitted microfiber material from shedding by encasing exposed raw edges of the microfiber material, thereby preventing linting of the material making up the cleaning mitt 100. The outer side 102 includes label stiches 110 for affixing an inner label to the inside of the cleaning mitt 100.

FIG. 1F illustrates a bottom view of the cleaning mitt 100.

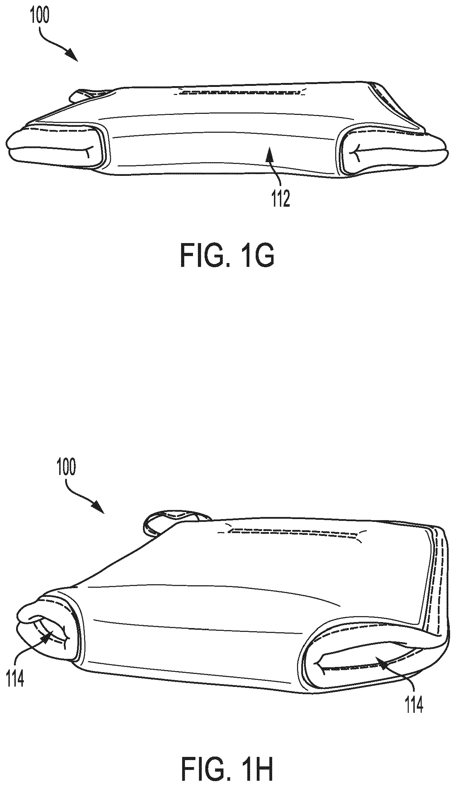

FIG. 1G illustrates a front view of the cleaning mitt 100. The cleaning mitt includes a seamless fold 112 arranged between and connecting opposing sides of the cleaning mitt 100. The seamless fold 112 provides a cleaning edge that may be used by a user to clean small corners and/or fine edges.

FIG. 1H illustrates a perspective front view of the cleaning mitt 100. The cleaning mitt 100 includes corner openings 114 adjacent to the seamless fold 112. The corner openings 114 allow for ventilation of the inside of the cleaning mitt 100, thereby increasing user comfort and facilitating cleaning out and drying of the cleaning mitt after a washing and/or laundering process.

The corner openings 114 further provide a cleaning mitt 100 configured without interior corners, thereby providing openings through which fibers and debris can be expelled from the cleaning mitt 100 during laundering and eliminating corners in which fibers and debris may otherwise become trapped and/or accumulate over use.

The corner openings 114 also allow for quicker penetration of a cleaning solution into all parts of the cleaning mitt when it is exposed to or submerged in a cleaning solution. For example, complete soaking of the cleaning mitt 100 to all portions of its inner side 104 may take longer without corner openings 114, as a cleaning solution would otherwise have to travel a further distance from a single opening of the cleaning mitt or else more slowly soak through a greater volume of the mitt. With the corner openings 114, however, a cleaning solution may penetrate directly and more evenly into the cleaning mitt from more than just one opening.

The corner openings 114 are also configured to decrease the resistance of the cleaning mitt 100 to having its opposite sides separated by insertion of a user's hand. That is, the corner openings allow widening of the interior space of the cleaning mitt 100 to accommodate a user's hand without uneven wrinkling of fabric or stressing stitches of the mitt, as exhibited in conventional mitts having corners. As a result of the reduced stress on the fabric of the mitt and its stiches, a more even outer side 102 may be maintained during a cleaning operation to facilitate more uniform cleaning of a surface across a greater area of the cleaning mitt 100.

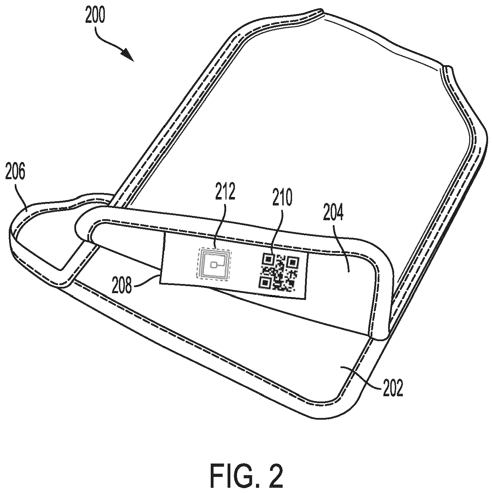

FIG. 2 illustrates a cleaning mitt 200 having a first inner surface 202 and an opposing second inner surface 204. An inner label 208 is affixed onto the second inner surface 204. A handle 206 is affixed to the side of the cleaning mitt 200 having the first inner surface 202. The inner label 208 may include visual information and/or electronic data for uniquely identifying the cleaning mitt 200. For example, the inner label 208 may include a scannable code 210 such as a bar code or a quick response (QR) code. In some embodiments, the inner label 208 may include one or more serial numbers or characters for identifying the cleaning mitt 200. In some embodiments, the inner label 208 includes a radio frequency identification (RFID) tag 212 that may be scanned by an RFID reader to identify the cleaning mitt 200.

The inner label 208 allows the cleaning mitt 200 to be tracked and monitored for a variety of purposes. For example, identification of the cleaning mitt 200 allows an owner to distinguish the cleaning mitt 200, which may be assigned for a particular cleaning task, from other mitts which are assigned to other cleaning tasks, thereby helping ensure that the correct cleaning mitt is used for its assigned tasks.

Identification of the cleaning mitt 200 also allows it to be combined with other mitts, possibly owned by different owners, for a preparation and/or laundering process at a central location while ensuring that mitts may be returned to their proper owner.

In some embodiments, the mitt may be monitored during cleaning operations to determine whether it has been prepared for a cleaning process, whether it has already been used for a cleaning process, whether it has been laundered, and/or the number of cleaning cycles the mitt has undergone.

For example, a user may scan the inner label 208 of the cleaning mitt 200 (or read its RFID) before any process. A signal may be sent by the scanner (or reader) to a computer, which stores the status of the cleaning mitt 200. The computer may use historical data to determine whether the cleaning mitt 200 has undergone a sufficient waiting time between certain operations and/or to determine the number of cycles of cleaning and/or laundering the cleaning mitt 200 has undergone. If an insufficient time has passed between operations or if a threshold number of cycles has been exceeded, the computer may indicate by audial or visual warning to a user that the cleaning mitt 200 should not be used for a particular operation. In this manner, compliance with strict cleaning quality standards may be ensured.

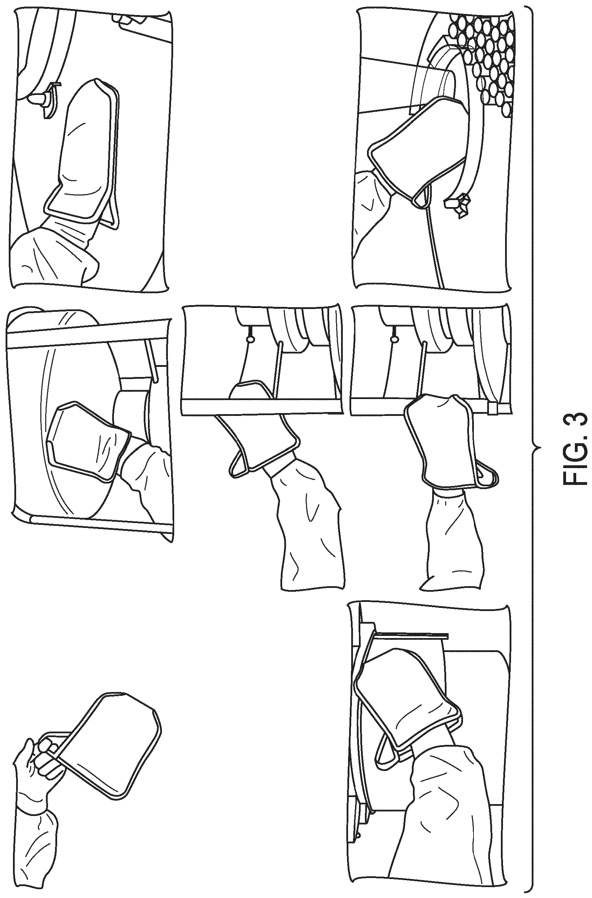

FIG. 3 illustrates a variety of uses of a cleaning mitt according to an embodiment of the present disclosure. The cleaning mitt exhibits versatility in cleaning processes in that it allows a user to easily clean the top, side, or underside of equipment. Oddly shaped surfaces such as poles and/or rails may also be easily cleaned, as the cleaning mitt is configured to conform to the shape of a user's hand during a cleaning operation.

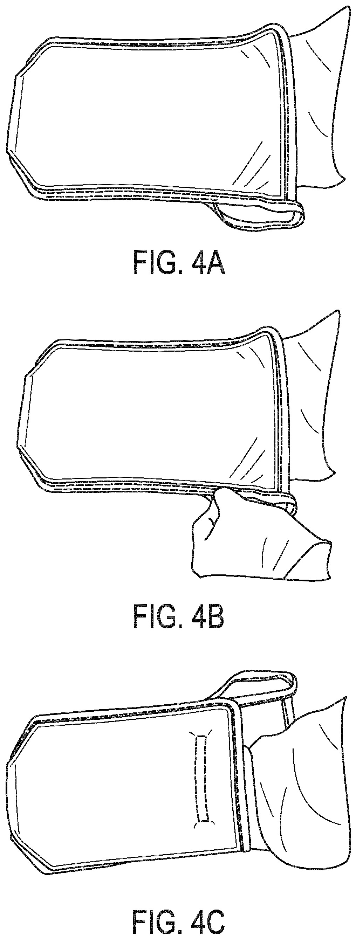

FIGS. 4A-4C illustrate a cleaning mitt being worn by a user. In FIG. 4A, a first side of a cleaning mitt is shown with an entire exposed surface of the mitt being configured as a cleaning surface. FIG. 4B illustrates a user gripping a handle of the cleaning mitt of FIG. 4A in order to fully insert their other hand through the cleaning mitt and/or to rotate the cleaning mitt around their hand. FIG. 4C illustrates an opposite side of the cleaning mitt of FIG. 4A.

In some embodiments, one side of the cleaning mitt is configured to clean up to a predetermined surface area (e.g., 100 square feet measured via testing on a flat stainless steel surface) before cleaning efficacy is degraded due to soiling. In such an embodiment, the cleaning mitt may therefore provide cleaning coverage for up to twice the predetermined surface area of one side (e.g., 200 square feet) before the mitt should be replaced with a fresh pre-prepared mitt to continue a cleaning operation. Accordingly, upon reaching approximately of the predetermined effective cleaning surface area with one side of the cleaning mitt, a user may use the handle to hold the cleaning mitt in place while rotating their hand within the cleaning mitt by 180 degrees, allowing them to continue cleaning with the opposite side of the cleaning mitt for another predetermined effective cleaning area.

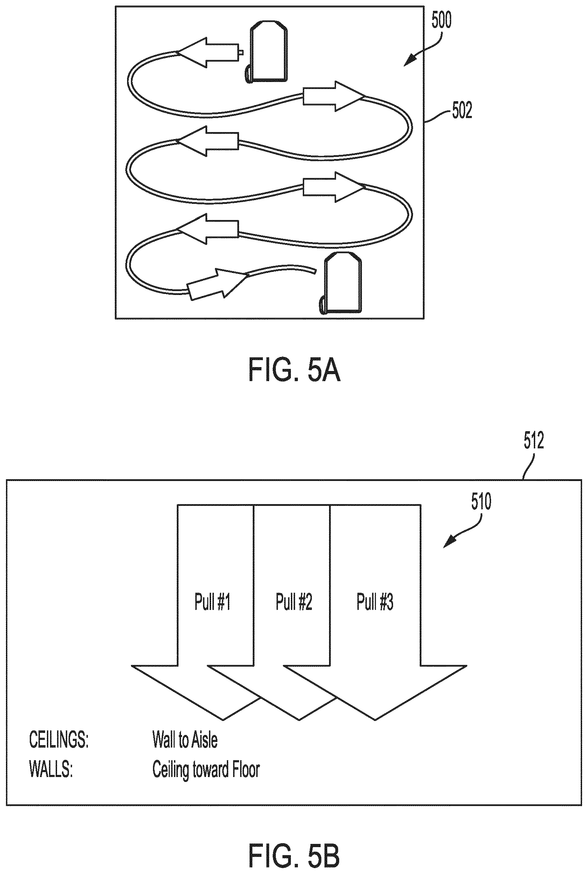

FIG. 5A illustrates a first cleaning pattern 500 used to clean a surface according to an embodiment of the present disclosure. A user cleans a surface 502 that is to be cleaned by first applying an outer surface of the cleaning mitt to one end of the surface 502. The mitt is then moved toward the opposing end of the surface 502 while moving laterally according to the first cleaning pattern 500, which resembles a figure eight pattern that progresses toward the opposing end of the surface 502.

FIG. 5B illustrates a second cleaning pattern 510. A user cleans a surface 512 that is to be cleaned by first applying an outer surface of the cleaning mitt to one end of the surface 512. The mitt is then moved straight toward the opposing end of the surface 512 to complete a first wipe (e.g., "Pull #1"). The same steps are then repeated for a second wipe (e.g., "Pull #2"), a third wipe (e.g., "Pull #3"), and/or as many wipes as necessary to fully clean the surface 512. Each wipe is offset from adjacent wipes, but is configured to at least partially overlap with adjacent wipes so as to ensure that the surface 512 is completely covered by the cleaning pattern 510 and is therefore completely cleaned.

In some embodiments, each wipe should overlap an adjacent wipe by at least one inch to ensure full coverage/cleaning of the surface 512. In the illustrated embodiment, the wipes are laterally offset from one another, although it will be readily understood that a different wiping direction may be used without departing from the spirit of the present disclosure.

In some embodiments, a ceiling cleaning operation includes cleaning the ceiling from a wall-adjacent end of the ceiling towards a part of the ceiling proximate to an aisle. In some embodiments, a wall cleaning operation includes cleaning the wall from ceiling-adjacent end of the wall to the opposing floor-adjacent end of the wall.

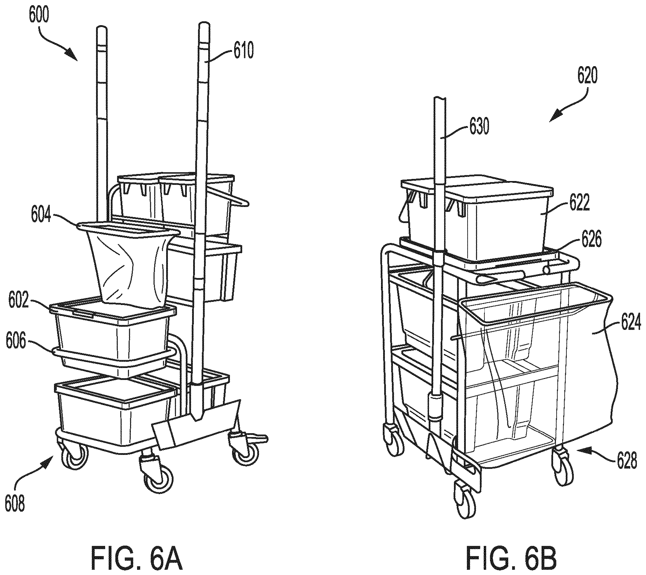

FIG. 6A illustrates an embodiment of a cleaning cart 600 for carrying containers 602 configured to store cleaning mitts according to embodiments of the present disclosure. The cleaning cart 600 includes trays 606 for supporting the weight of containers 602. The cleaning cart 600 includes a disposal bag 604 for disposing of used cleaning mitts and wheels 608, such as caster wheels, which facilitate movement of the cart 600. Handles 610 are also provided to allow a user to hold and move the cart 600.

FIG. 6B illustrates an embodiment of a cleaning cart 620 for carrying containers 622 configured to store cleaning mitts according to embodiments of the present disclosure. The cleaning cart 600 includes trays 606 for supporting the weight of containers 602. The cleaning cart 620 includes a disposal bag 624 for disposing of used cleaning mitts and wheels 628, such as caster wheels, which facilitate movement of the cart 620. Handles 630 are also provided to allow a user to hold and move the cart 620.

Embodiments of the cart 600, 620 are configured to provide a user with all necessary equipment for a cleaning operation, including containers with pre-prepared cleaning mitts, thereby making transport of the cleaning mitts to a cleaning site, around a cleaning site, and away from the cleaning site convenient and compact. In some embodiments, the cart may also include trays and/or storage areas for carrying cleaning agents necessary to pre-prepare the cleaning mitts using methods that will be described in greater detail hereafter. For example, the carts 600 620 may include trays for holding separate containers that include the cleaning solutions used to pre-prepare the cleaning mitts. A sieve for pre-preparing the cleaning mitts may also be transported within the cart, and even within the containers 602, 622 or separate containers.

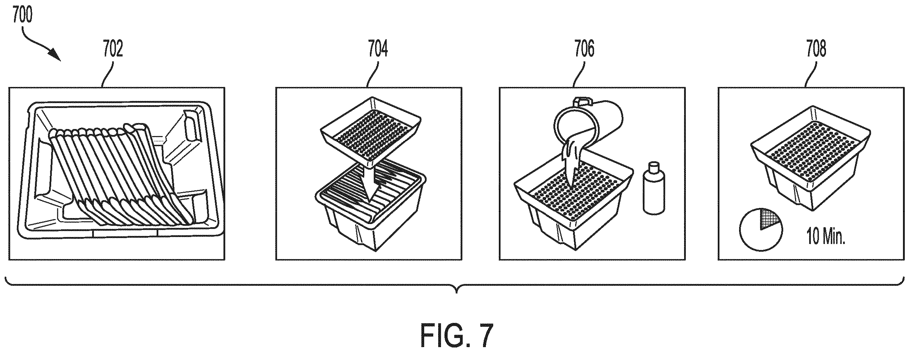

FIG. 7 illustrates a cleaning mitt preparation method 700 according to an embodiment of the present disclosure. In a first step 702, a plurality of cleaning mitts are arranged in a stack and on their sides in a side-by-side configuration and with their handles facing upwards for easier access from above to a user. In some embodiments, up to 12 cleaning mitts may be stacked and pre-prepared in a single container. In a second step 704, a sieve is positioned over the plurality of cleaning mitts in the container. In a third step 706, a cleaning solution is poured over the plurality of cleaning mitts through the sieve. In some embodiments, the cleaning solution may be premixed and may comprise a disinfectant. In some embodiments, a volume of about 175 milliliters of solution may be poured into the container per cleaning mitt in the container. It has been found that such a volume of solution is preferred, as it provides sufficient solution for even distribution of the solution among a plurality of mitts configured to fit over an average user's hand. In a fourth step 708, the cleaning solution should be allowed to sit for at least ten minutes before the cleaning mitts may be used, thus ensuring full saturation of the solution among the cleaning mitts.

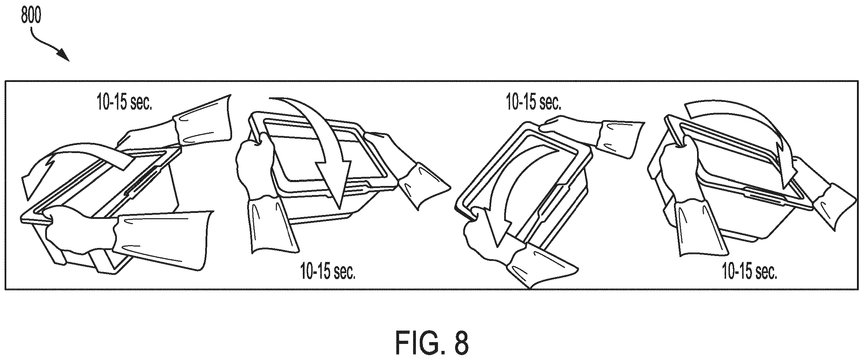

FIG. 8 illustrates additional steps that may be carried out in the method illustrated in FIG. 7. Specifically, prior to the fourth step 708, a user may perform a 45 degree tilt in four different directions to ensure a more thorough saturation of the cleaning solution among the cleaning mitts in the container. To do so, a user may tilt the container 45 degrees for ten to fifteen seconds in each of a forward, backward, left side, and right side direction/position. Once each position has been held for ten to fifteen seconds, the process may be repeated for all four positions in some embodiments. Upon completion, the fourth step 708 of the method 700 according to FIG. 7 may be carried out so that the cleaning solution is allowed to sit for at least ten minutes before the cleaning mitts are used.

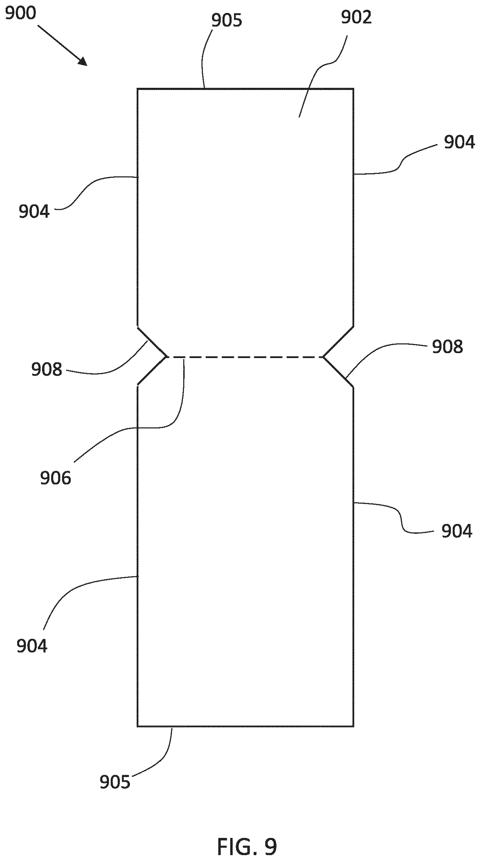

FIG. 9 illustrates a pattern 900 for assembling a cleaning mitt according to an embodiment of the present disclosure. The pattern 900 includes a single body 902 of material. The body 902 includes longitudinal or lengthwise edges 904 and widthwise edges 905. A folding line 906 illustrates where the body 902 is folded, the folding line 906 being perpendicular to lengthwise edges 904. As a result, the lengthwise edges 904 fold onto themselves when the body 902 is folded along the folding line 906. In the illustrated embodiment, the folding line 906 does not symmetrically bisect the body 902, resulting in an offset between widthwise edges 905 then the body 902 is folded. In some embodiments, the folding line 906 can instead symmetrically bisect the body 902 such that the widthwise edges 905 are brought into full alignment upon folding the body 902, resulting in a perfectly symmetrical pattern and a symmetrical cleaning mitt.

Cutouts 908 are also included on either side of the folding line 906 at the lengthwise edges 904. In the illustrated embodiment, the cutouts 908 are triangular in shape, with an apex of each triangle being aligned with the folding line 906. As a result of the cutouts 908, corner openings are formed when the body 902 is folded, providing a cleaning mitt without corners at which debris can accumulate.

It will be readily understood that the pattern 900 illustrated in FIG. 9 is illustrative only, and does not represent an exact or to-scale pattern used to create a cleaning mitt. For example, although perfect corners and sharp angles are illustrated, corners and sharp angles can be eliminated by rounding them, thereby increasing the stress resiliency of the body 902 and avoiding folds or creases sometimes associated with sewn materials having sharp corners. Furthermore, it will be readily understood that the cutouts 908 may have a variety of shapes and sizes. For example, cutouts 908 may be semi-circular, semi-ovular, square, or rectangular. While such varying shapes may have varying complexities, they nonetheless have the effect of eliminating corners in a fully assembled cleaning mitt.

While subject matter of the present disclosure has been illustrated and described in detail in the drawings and foregoing description, such illustration and description are to be considered illustrative or exemplary and not restrictive. Any statement made herein characterizing the invention is also to be considered illustrative or exemplary and not restrictive as the invention is defined by the claims. It will be understood that changes and modifications may be made, by those of ordinary skill in the art, within the scope of the following claims, which may include any combination of features from different embodiments described above.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A cleaning mitt, the cleaning mitt comprising:
an outer fabric and an inner fabric, the outer fabric being configured for cleaning surfaces;
a receiving opening configured for receiving a hand of a user;
a seamless folding edge arranged opposite the receiving opening; and
at least two corner openings on either side of the seamless folding edge.

2. The cleaning mitt of claim 1, wherein the outer fabric comprises a microfiber having a cleaning efficacy rated to provide a 4-log reduction on a surface with a single wipe during a cleaning operation.

3. The cleaning mitt of any of the preceding claims, wherein the outer fabric is configured to clean a surface in compliance with European Union Good Manufacturing Practice (EU GMP) Annex 1 with a single wipe of the surface.

4. The cleaning mitt of any of the preceding claims, further comprising a label affixed on the inner fabric, and wherein the label includes identifying information uniquely identifying the cleaning mitt.

5. The cleaning mitt of claim 4, wherein the identifying information includes one or more of an owner identity, a cleaning use case, and a lot identity and/or wherein the identifying information comprises one or more of a bar code or a quick response (QR) code.

6. The cleaning mitt of claim 4 or 5, wherein the label further comprises a radio frequency identification (RFID) tag storing the identifying information.

7. The cleaning mitt of any of the preceding claims, wherein at least part of the inner fabric is exposed and extends beyond the receiving opening.

8. The cleaning mitt of any of the preceding claims, wherein the outer fabric is arranged on each of two sides of the cleaning mitt, and wherein the outer fabric of each side is configured to clean at least 100 square feet of a flat stainless steel surface.

9. The cleaning mitt of any of the preceding claims, wherein the inner fabric and the outer fabric each comprise a single uninterrupted body of fabric.

10. The cleaning mitt of claim 9, wherein the inner fabric and the outer fabric each comprise longitudinal edges, wherein the inner fabric and the outer fabric are folded at the seamless edge such that each longitudinal edge is folded onto itself, and wherein each longitudinal edge that is folded onto itself is sewn.

11. The cleaning mitt of claim 10, comprising a binding band surrounding a periphery of the inner fabric and the outer fabric, the binding band comprising a non-linting textile.

12. The cleaning mitt of any of the preceding claims, wherein the cleaning mitt is configured to be commercially laundered and reusable and/or wherein the cleaning mitt is configured to withstand gamma-irradiation.

13. The cleaning mitt of any of the preceding claims, wherein the outer fabric is configured for sterile cleaning.

14. A method for preparing a cleaning mitt, the method comprising:
providing an uninterrupted body of fabric;
removing two portions of the uninterrupted body of fabric, the two portions being on opposite longitudinal edges of the uninterrupted body of fabric and aligned with a folding line perpendicular to the longitudinal edges;
folding the uninterrupted body of fabric along the folding line; and
sewing each longitudinal edge of the folded uninterrupted body of fabric to form a receiving opening for receiving a hand of a user in the folded uninterrupted body of fabric.

15. A cleaning system, comprising:
a plurality of cleaning mitts stacked side-by-side and arranged in a container;
a cart including a support configured to receive and support a weight of the container;
a disposal bag for disposing of used cleaning mitts; and
one or more wheels configured to provide mobility to the cleaning system.
